# EUROPEAN PATENT APPLICATION

(11) **EP 3 200 492 A1**
(43) Date of publication of application: **02.08.2017**
(21) Application number: 15844315.0
(22) Date of filing: 13.04.2015
(51) Int. Cl.: H04W 12/06, H04L 12/771

(54) **AUTHENTICATION METHOD, WIRELESS ROUTER AND COMPUTER STORAGE MEDIUM**

(30) Priority: 26.09.2014 CN 201410505901
(71) Applicant: ZTE Corporation, Shenzhen, Guangdong 518057 (CN)
(72) Inventor: GUO, Lizhi, Shenzhen Guangdong 518057 (CN)
(74) Representative: Brevalex
(86) International application number: PCT/CN2015/076438
(87) International publication number: WO 2016/045359

(57) **Abstract**

Disclosed is an authentication method applied to a wireless router, the wireless router being configured with a confirmation key. The method comprises: receiving a first wireless access request from a terminal, the first wireless access request carrying identification information uniquely identifying the terminal. If the identification information is not found in the wireless router, the terminal is determined to be performing a first-time access; upon receipt of a confirmation instruction triggered by a confirmation operation of the confirmation key within a preset time, the terminal is confirmed to be legitimate, and the identification information is stored, the identification information being used to verify the terminal legitimacy the next time the terminal requests access. Also disclosed are a wireless router and computer storage medium.

## Description

### TECHNICAL FIELD

The present disclosure generally relates to wireless router techniques, and more particularly to an authentication method, wireless router and computer storage medium.

### BACKGROUND

Conventionally, when a wireless network is established by a user, a Service Set Identifier (SSID) and a security key are manually set at a wireless access point. Then, the key is verified on a base station device so as to prevent intrusion of a malicious intruder.

Currently, WiFi key cracking prevails. Some WiFi shareware make identity verification information for access to be useless once a terminal gets access to the wireless router, as the terminal may access the wireless router next time without performing verification on the terminal using the identify verification information. This may cause the wireless router to be vulnerable to illegal user access.

Therefore, currently, there is no solution of accessing a wireless router safely and reliably.

### SUMMARY

In view of the above, it is desired to provide an authentication method, wireless router and computer storage medium in embodiments of the present disclosure.

To this end, the technical solutions of the embodiments of the disclosure are implemented as follows.

According to a first aspect, an embodiment of the disclosure provides an authentication method applied in a wireless router. A confirmation key is provided on the wireless router. The method includes the following steps: a first wireless access request from a terminal is received; the first wireless access request carries identification information identifying the terminal uniquely; when the identification information is not found by a query in the wireless router, it is determined that it is a first time that the terminal accesses the wireless router; when a confirmation instruction triggered by a confirmation operation on the confirmation key is received within a preset time period, it is confirmed that the terminal is legal and the identification information is stored. The identification information is used to verify legality of the terminal when the terminal requests to access the wireless router next time.

According to an embodiment, after determining that it is the first time that the terminal accesses the wireless router, the method may further include the following step: it is determined that the terminal is illegal, when failing to receive the confirmation instruction triggered by the confirmation operation within the preset time period.

According to an embodiment, after determining that it is the first time that the terminal accesses the wireless router, and before receiving the confirmation instruction triggered by the confirmation operation on the confirmation key within the preset time period, the method may further include the following step: a prompt message is output to prompt a user to perform the confirmation operation.

According to an embodiment, after storing the identification information, the method may further include the following steps: a second wireless access request is received from the terminal; the second wireless access request carries the identification information; and when the identification information is found by the query in the wireless router, it is determined that it is not the first time that the terminal accesses the wireless router, to confirm that the terminal is legal.

According to a second aspect, an embodiment of the disclosure provides a wireless router. The wireless router includes a reception unit, a determination unit, and a storage unit. The reception unit is arranged to receive a first wireless access request from a terminal. The first wireless access request carries identification information identifying the terminal uniquely. The determination unit is arranged to determine that it is a first time that the terminal accesses the wireless router, when the identification information is not found by a query in the wireless router. The determination unit is further arranged to confirm that the terminal is legal, upon reception of a confirmation instruction triggered by a confirmation operation on the confirmation key within a preset time period. The storage unit is arranged to store the identification information. The identification information is used to verify legality of the terminal when the terminal requests to access the wireless router next time.

According to an embodiment, the determination unit is further arranged to determine that the terminal is illegal, when failing to receive the confirmation instruction triggered by the confirmation operation within the preset time period, after determining that it is the first time that the terminal accesses the wireless router.

According to an embodiment, the wireless router may further include an output unit. The output unit is arranged to output a prompt message to prompt a user to perform the confirmation operation, after the determination unit determines that it is the first time that the terminal accesses the wireless router, and before receiving the confirmation instruction triggered by the confirmation operation on the confirmation key within the preset time period.

According to an embodiment, the reception unit may be further arranged to receive a second wireless access request from the terminal after the storage unit stores the identification information. The second wireless access request carries the identification information. The determination unit may be further arranged to determine that it is not the first time that the terminal accesses the wireless router, to confirm that the terminal is legal, when the identification information is found by the query in the wireless router.

According to a third aspect, an embodiment of the disclosure provides a computer storage medium including instructions, which, when executed by at least one processor, causes the at least one processor to perform the authentication method.

According to the authentication method, the wireless router and the computer storage medium provided in the embodiments of the disclosure, a confirmation key is provided on the wireless router. When the wireless router receives a first wireless access request carrying identification information identifying a terminal uniquely from the terminal, the wireless router may determine that it is the first time that the terminal accesses the wireless router based on the identification information. Then, if the wireless router receives a confirmation instruction triggered by a confirmation operation on the confirmation key within a preset time period, the wireless router determines that the terminal is legal and stores the identification information. Thereby, when the terminal requests to access the wireless router next time, the wireless router may determine whether the terminal is legal based on the identification information. Due to limitation of placement of the wireless router, not all persons can get close to the wireless router and operate the confirmation key. Generally, users that can get close to the wireless router and operate the confirmation key are legal users, and thus terminals of the users are terminals which are allowed by the owner of the wireless router to access the wireless router. In this way, the legality of the terminals which request to access the wireless router are confirmed through the confirmation key. Accordingly, the security and reliability of the wireless router may be improved greatly, access of illegal users may be prevented and user experiences may be improved.

### BRIEF DESCRIPTION OF THE DRAWINGS

Fig. 1 is a schematic flowchart of an authentication method according to an embodiment of the disclosure;
Fig. 2 is a schematic flowchart of a method by which a terminal accesses a wireless router according to an embodiment of the disclosure; and
Fig. 3 is a structural schematic diagram of a wireless router according to an embodiment of the disclosure.

### DEATIALED DESCRIPTION

The technical solutions of the embodiments of the disclosure will be described in detail and completely, in conjunction with the appended drawings of the embodiments of the disclosure.

An embodiment of the disclosure provides an authentication method applied in a wireless router. A confirmation key is provided on the wireless router. The confirmation key may be a physical key, or may be a virtual key within a confirmation prompt interface displayed on a display screen of the wireless router. Of course, the confirmation key may have other forms, and is not limited to the embodiment.

In practice, when the confirmation key is a physical key and some wireless routers enable a WiFi Protected Setup (WPS) function, a WPS key may be reused as the confirmation key.

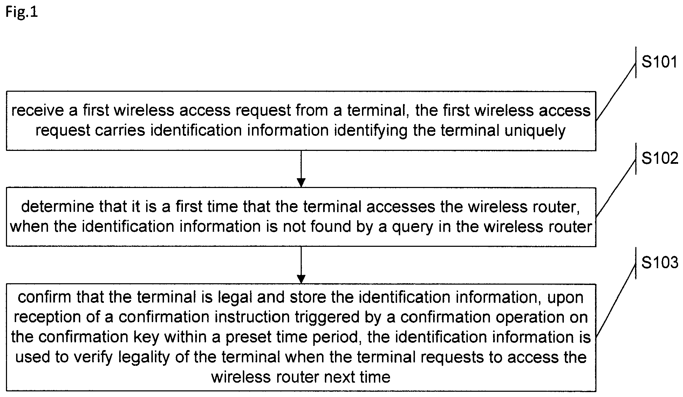

Fig. 1 is a schematic flowchart of an authentication method according to an embodiment of the disclosure. As shown in Fig. 1, the method includes the following steps.

In step S101, a first wireless access request is received from a terminal. The first wireless access request carries identification information identifying the terminal uniquely.

Specially, when it is a first time that a user uses a terminal to access the wireless router, the terminal may transmit, to the wireless router, the identification information identifying the terminal uniquely.

In practice, the identification information may be a Media Access Control (MAC) address of a network card, a network port number or the like of the terminal. Of course, the identification information may have other forms as long as the identification information can identify the terminal uniquely, and the identification information is not limited in the embodiment.

In practice, when it is the first time that the terminal accesses the wireless router, the user may need to input a SSID or a security key, and then the terminal may transmit, to the wireless router, the SSID, the security key and the identification information together in the first wireless access request.

In step S102, when the identification information is not found by a query in the wireless router, it is determined that it is a first time that the terminal accesses the wireless router.

Specially, after the wireless router receives the first wireless access request, the first wireless access request may be parsed to obtain the identification information. Then, whether the identification information is stored, is queried in the wireless router. Since it is the first time that the terminal accesses the wireless router and thus the wireless router does not store the identification information, it is determined that it is the first time that the terminal accesses the wireless router when the identification information is not found by the query in the wireless router.

In practice, in order to prompt the user to perform a confirmation operation on the confirmation key, after step S102, the method may include a step of outputting a prompt message to prompt the user to perform the confirmation operation.

Optionally, the wireless router may output the prompt message acoustically or visually. For example, the prompt message may be output by a voice prompt, a prompt sound, or flicking a light emitting diode (LED) light. Of course, there are other ways in which the prompt message is output, and this is not limited in the embodiment.

In step S103, upon reception of a confirmation instruction triggered by a confirmation operation on the confirmation key within a preset time period, it is confirmed that the terminal is legal and the identification information is stored. The identification information is used to verify legality of the terminal when the terminal requests to access the wireless router next time.

Specially, after it is determined that it is the first time that the terminal accesses the wireless router, the user may press the confirmation key on the wireless router manually. When the wireless router receives the confirmation instruction triggered by the confirmation operation within the preset time period, the wireless router determines that the terminal is legal and stores the identification information.

In practice, in case that the user does not perform the confirmation operation within the preset time period, after step S102, the method may further include a step of determining that the terminal is illegal, when failing to receive the confirmation instruction triggered by the confirmation operation within the preset time period. At this time, the wireless router may forbid the access of the terminal.

In practice, the preset time may be 10 seconds, 30 seconds, 1 minute or the like. The skilled in the art may set the preset time as required, and this is not limited to the embodiment.

So far, the flow of the authentication method by which the terminal accesses the wireless router for the first time is completed.

Thereafter, when the terminal accesses the wireless router for a second time or an Nth time, after step 103, the method may further include the following steps. A second wireless access request is received from the terminal. The second wireless access request carries the identification information. When the identification information is found by the query in the wireless router, it is determined that it is not the first time that terminal accesses the wireless router, to confirm that the terminal is legal. Here, the N is an integer greater than or equal to 2.

Specially, when the terminal accesses the wireless router again, the terminal may transmit, to the wireless router, the second wireless access request which still carries the identification information. Then, the wireless router queries whether the identification information is stored. Since the wireless router has stored the identification information of the terminal during the process of the terminal accessing the wireless router for the first time, the identification information of terminal may be found by the query of the wireless route. At this time, the wireless router can determine that it is not the first time that the terminal accesses the wireless router, to confirm that the terminal is legal.

In practice, when the terminal accesses the wireless router not for the first time, the user still needs to input the SSID and the security key. Then, the terminal may transmit, to the wireless router, the SSID, the security key and the identification information together in the second wireless access request.

According to the one or more embodiments, when the wireless router confirms that the terminal is legal, the wireless router may verify the SSID and the security key. When the verification succeeds, the terminal accesses the wireless router normally. When the verification fails, the terminal fails to access the wireless router.

Hereinafter, a method of accessing the wireless router will be described, in which the authentication solution of the one or more embodiments are applied.

For example, the terminal A is to access the wireless router B. The identification information identifying the terminal A uniquely is denoted by S.

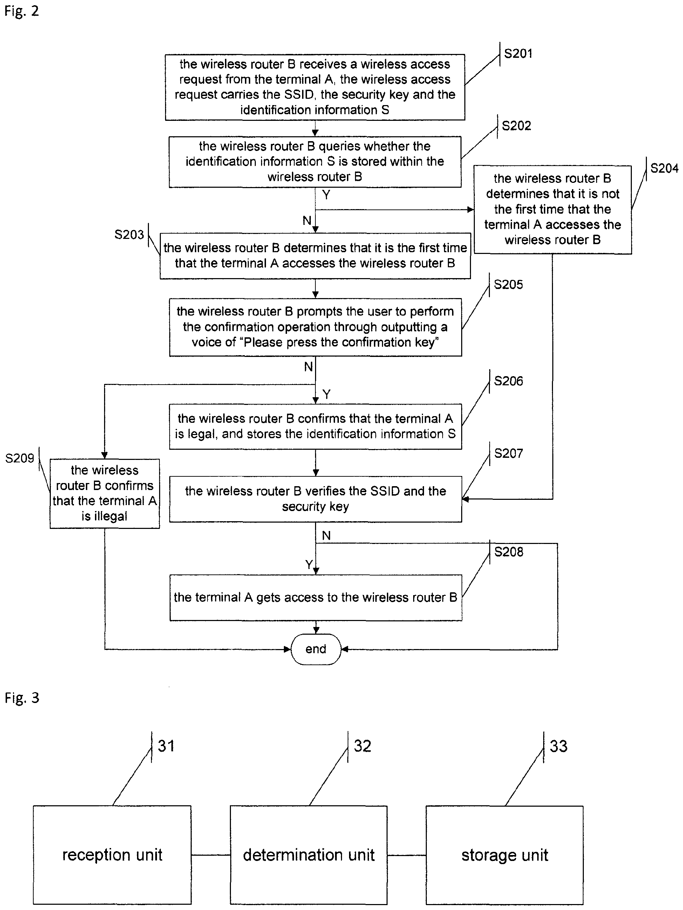

Fig. 2 is a schematic flowchart of the method by which the terminal accesses the wireless router according to the embodiment of the disclosure. As shown in Fig. 2, the method includes the following steps.

In step S201, the wireless router B receives a wireless access request from the terminal A. The wireless access request carries the SSID, the security key and the identification information S.

In step S202, the wireless router B queries, within the wireless router B, whether the identification information S is stored. When the identification information S is stored, the flow proceeds to a step S204. When the identification information S is not stored, the flow proceeds to a step S203.

In step S203, the wireless router B determines that it is the first time that the terminal A accesses the wireless router B. The flow proceeds to step S205.

In step S204, the wireless router B determines that it is not the first time that the terminal A accesses the wireless router B. The flow proceeds to step S207.

In step S205, the wireless router B prompts the user to perform the confirmation operation through outputting a voice of "Please press the confirmation key". Upon reception of the confirmation instruction triggered by the confirmation operation on the confirmation key within 30 seconds, the flow proceeds to step S206. In case that the confirmation instruction triggered by the confirmation operation on the confirmation key is not received within 30 seconds, the flow proceeds to step S209.

In step S206, the wireless router B confirms that the terminal A is legal, and stores the identification information S.

In step S207, the wireless router B verifies the SSID and the security key. In case that the verification succeeds, the flow proceeds to step S208. In case that the verification fails, the flow is ended.

In step S208, the terminal A gets access to the wireless router B, and the flow is ended.

In step S209, the wireless router B confirms that the terminal A is illegal, and the flow is ended.

From the above description, due to limitation of placement of the wireless router, not all persons can get close to the wireless router and operate the confirmation key. Generally, users that can get close to the wireless router and operate the confirmation key are legal users, and thus terminals of the users are terminals which are allowed by the owner of the wireless router to access the wireless router. In this way, the legality of the terminals which request to access the wireless router are confirmed through the confirmation key. Accordingly, the security and reliability of the wireless router may be improved greatly, access of illegal users may be prevented and user experiences may be improved.

Based on the same inventive concept, an embodiment of the disclosure provides a wireless router. The wireless router is consistent with the wireless router according to the above one or more embodiments.

Fig. 3 is a structural schematic diagram of the wireless router according to the embodiment of the disclosure. As shown in Fig. 3, the wireless router includes a reception unit 31, a determination unit 32 and a storage unit 33. The reception unit 31 is arranged to receive a first wireless access request from a terminal. The first wireless access request carries identification information identifying the terminal uniquely. The determination unit 32 is arranged to determine that it is a first time that the terminal accesses the wireless router, when the identification information is not found by a query in the wireless router. The determination unit 32 is further arranged to confirm that the terminal is legal, upon reception of a confirmation instruction triggered by a confirmation operation on the confirmation key within a preset time period. The storage unit 33 is arranged to store the identification information. The identification information is used to verify legality of the terminal when the terminal requests to access the wireless router next time.

In practice, the determination unit 32 may be further arranged to determine that the terminal is illegal, when failing to receive the confirmation instruction triggered by the confirmation operation within the present time period, after determining that it is the first time that the terminal accesses the wireless router.

In practice, the wireless router may further include an output unit. The output unit is arranged to output a prompt message to prompt the user that it is the first time that the terminal accesses the wireless router, after the determination unit determines that it is the first time that the terminal accesses the wireless router, and before receiving the confirmation instruction triggered by the confirmation operation on the confirmation key within the preset time period.

In practice, the reception unit 31 may be further arranged to receive a second wireless access request from the terminal after the storage unit stores the identification information. The second wireless access request carries the identification information. The determination unit 32 may be further arranged to determine that it is not the first time that the terminal accesses the wireless router, to confirm that the terminal is legal, when the identification information is found by the query in the wireless router.

All of the reception unit 31, the determination unit 32, the storage unit 33 and the output unit may be arranged in a processor such as a CPU, an ARM and the like of the wireless router, or may be arranged in a single chip, a system-level chip or an embedded controller. The disclosure is not limited thereto.

Those skilled in the art shall understand that the embodiments of the disclosure may be provided as a method, a system or a computer program product. Thus, forms of hardware embodiments, software embodiments or embodiments integrating software and hardware may be adopted in the disclosure. Moreover, a form of the computer program product implemented on one or more computer available storage media (including but not limited to, a magnetic disk memory and an optical memory and the like) containing computer available program codes may be adopted in the disclosure.

The disclosure is described with reference to flow charts and/or block diagrams of the method, the device (system) and the computer program product according to the embodiments of the disclosure. It will be appreciated that each flow and/or block in the flow charts and/or the block diagrams and a combination of the flows and/or the blocks in the flow charts and/or the block diagrams may be implemented by computer program instructions. These computer program instructions may be provided for a general computer, a dedicated computer, an embedded processor or processors of other programmable data processing devices to generate a machine, such that an apparatus for implementing functions designated in one or more flows of the flow charts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, such that a manufactured product including an instruction apparatus is generated via the instructions stored in the computer readable memory, and the instruction apparatus implements the functions designated in one or more flows of the flow charts and/or one or more blocks of the block diagrams.

These computer program instructions may also be loaded to the computers or the other programmable data processing devices, such that processing implemented by the computers is generated by executing a series of operation steps on the computers or the other programmable devices, and therefore the instructions executed on the computers or the other programmable devices provide a step of implementing the functions designated in one or more flows of the flow charts and/or one or more blocks of the block diagrams.

Based on this, an embodiment of the disclosure further provides a computer storage medium comprising instructions. The instructions, when executed by at least one processor, causes the at least one processor to perform any one of the authentication methods.

The described embodiments above are merely preferred embodiments of the disclosure, and are not intended to limit the protection scope of the disclosure.

## Claims

1. An authentication method, applied in a wireless router, a confirmation key being provided on the wireless router, the method comprising:
receiving a first wireless access request from a terminal, wherein the first wireless access request carries identification information identifying the terminal uniquely;
determining that it is a first time that the terminal accesses the wireless router, when the identification information is not found by a query in the wireless router; and
confirming that the terminal is legal and storing the identification information, upon reception of a confirmation instruction triggered by a confirmation operation on the confirmation key within a preset time period, wherein the identification information is used to verify legality of the terminal when the terminal requests to access the wireless router next time.

2. The method according to claim 1, wherein after determining that it is the first time that the terminal accesses the wireless router, the method further comprises:
determining that the terminal is illegal, when failing to receive the confirmation instruction triggered by the confirmation operation within the preset time period.

3. The method according to claim 1, wherein after determining that it is the first time that the terminal accesses the wireless router, and before receiving the confirmation instruction triggered by the confirmation operation on the confirmation key within the preset time period, the method further comprises:
outputting a prompt message to prompt a user to perform the confirmation operation.

4. The method according to claim 1, wherein after storing the identification information, the method further comprises:
receiving a second wireless access request from the terminal, wherein the second wireless access request carries the identification information; and
determining that it is not the first time that the terminal accesses the wireless router, to confirm that the terminal is legal, when the identification information is found by the query in the wireless router.

5. A wireless router, comprising:
a reception unit, arranged to receive a first wireless access request from a terminal, wherein the first wireless access request carries identification information identifying the terminal uniquely;
a determination unit, arranged to determine that it is a first time that the terminal accesses the wireless router, when the identification information is not found by a query in the wireless router; and confirm that the terminal is legal, upon reception of a confirmation instruction triggered by a confirmation operation on the confirmation key within a preset time period;
a storage unit, arranged to store the identification information, wherein the identification information is used to verify legality of the terminal when the terminal requests to access the wireless router next time.

6. The wireless router according to claim 5, wherein the determination unit is further arranged to determine that the terminal is illegal, when failing to receive the confirmation instruction triggered by the confirmation operation within the preset time period, after determining that it is the first time that the terminal accesses the wireless router.

7. The wireless router according to claim 5, further comprising an output unit arranged to output a prompt message to prompt a user to perform the confirmation operation, after the determination unit determines that it is the first time that the terminal accesses the wireless router, and before receiving the confirmation instruction triggered by the confirmation operation on the confirmation key within the preset time period.

8. The wireless router according to claim 5, wherein the reception unit is further arranged to receive a second wireless access request from the terminal after the storage unit stores the identification information, wherein the second wireless access request carries the identification information; and
the determination unit is further arranged to determine that it is not the first time that the terminal accesses the wireless router, to confirm that the terminal is legal, when the identification information is found by the query in the wireless router.

9. A computer storage medium comprising instructions, wherein the instructions, when executed by at least one processor, causes the at least one processor to perform the authentication method according to any one of claims 1 to 4.
